Europäisches Patentamt

European Patent Office

Office européen des brevets

(19)

(11) Veröffentlichungsnummer : **0 200 160 B1**

# EUROPÄISCHE PATENTSCHRIFT

(12)

(45) Veröffentlichungstag der Patentschrift :
09.08.89

(21) Anmeldenummer : 86105658.8

(22) Anmeldetag : 24.04.86

(51) Int. Cl.⁴ : **F 16 K 11/07**

---

(54) **Ventil.**

---

(30) Priorität : **02.05.85 US 729515**

(43) Veröffentlichungstag der Anmeldung :
**05.11.86 Patentblatt 86/45**

(45) Bekanntmachung des Hinweises auf die Patenterteilung : **09.08.89 Patentblatt 89/32**

(84) Benannte Vertragsstaaten :
**AT BE DE FR GB IT NL SE**

(56) Entgegenhaltungen :
**US--A-- 3 742 980**
**US--A-- 3 825 033**
**US--A-- 3 866 880**

(73) Patentinhaber : **DEERE & COMPANY**
**1 John Deere Road**
**Moline Illinois 61265 (US)**

(72) Erfinder : **Bernard, Jerald Dean**
**1805 W. Ridgewood Drive**
**Cedar Falls Iowa 50613 (US)**
Erfinder : **Koltookian, Sarkis Aram**
**1218 Bauch Street**
**Waterloo Iowa 50701 (US)**

(74) Vertreter : **Feldmann, Bernhard et al**
**DEERE & COMPANY European Office, Patent Department Steubenstrasse 36-42 Postfach 503**
**D-6800 Mannheim 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Ventil mit einem in einer Ventilbohrung gleitend geführten Ventilschieber, der in eine Stellung, in der er einen Durchgang freigibt, und in eine Stellung, in der er den Durchgang sperrt, mittels endseitig an den Ventilschieber angelegter Drücke bringbar ist.

Ein derartiges Ventil ist in der US-A-3 825 033 offenbart und enthält einen Ventilschieber, an dessen beiden Endseiten jeweils ein Steuerdruck ansteht. Sobald die Steuerdrükke unterschiedlich sind, wird der Ventilschieber in eine Stellung verschoben und gibt einen Durchgang von einer Pumpe zu einem Hydraulikzylinder für eine Druckflüssigkeit frei.

Diesem bekannten Ventil haftet der Nachteil an, daß es dazu neigt, an der Wandung der Ventilbohrung festzuhängen, wenn es in einer Stellung für längere Zeit festgehalten wird und evtl. mit nur einem geringen Druck aus dieser Stellung bewegt werden soll.

Die der Erfindung zugrunde liegende Aufgabe wird darin gesehen, das Ventil derart zu verbessern, daß es weniger dazu neigt, in einer eingenommenen Stellung hängen bzw. haften zu bleiben.

Diese Aufgabe ist erfindungsgemäß dadurch gelöst worden, daß zumindest an einem der Enden des Ventilschiebers eine Federvorrichtung vorgesehen ist, die über einen an dem anderen Ende des Ventilschiebers anstehenden Druck vorgespannt wird und daß die Federvorrichtung den Ventilschieber aus der der Vorspannung unterliegenden Endstellung zur Überwindung der anfänglichen Haftreibung über einen vorbestimmten Weg bewegt.

Auf diese Weise wird vorsorglich eine Federkraft an dem Ventilschieber aufgebaut, die diesen sofort aus der eingenommenen Stellung bewegt, wenn der den Ventilschieber in dieser Stellung haltende Steuerdruck nachläßt.

Dadurch, daß nach einem weiteren hervorragenden Gedanken die Federvorrichtung erst gespannt wird, wenn der Ventilschieber eine bestimmte Stellung passiert hat, ist gewährleistet, daß das Steuerverhalten des Ventils durch die Federvorrichtung nicht beeinflußt wird.

Die weiteren Unteransprüche geben vorteilhafte konstruktive und das erfinderische Ventil weiterentwickelnde Merkmale an.

Es kann auch vorgesehen sein, die Hülse oder einen sonstigen gegenüber dem Ventilschieber beweglichen Teil nicht gegen ein Ende der Ventilbohrung, sondern gegen einen darin vorgesehenen Absatz oder dergleichen zur Anlage bringen zu lassen.

In der Zeichnung ist ein nachfolgend näher beschriebenes Ausführungsbeispiel der Erfindung dargestellt. Es zeigt:

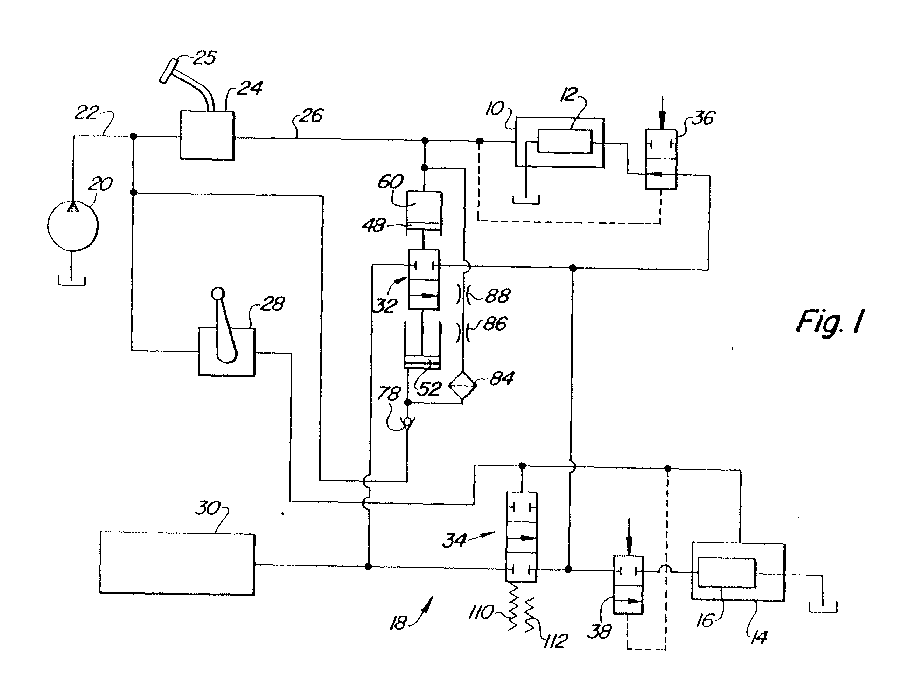

Figur 1 ein Steuersystem in schematischer Darstellung und mit einem Ventil und

Figur 2 das Ventil in gegenständlicher Darstellung und im Längsschnitt.

In einem herkömmlichen, jedoch nicht gezeigten Ackerschlepper mit einem Hydraulikkreislauf ist eine hydraulisch betätigte Kupplung 10, insbesondere eine Fahrkupplung, mit einem Schmierkreis 12, der auch als Kühlkreis wirkt, und eine ebenfalls hydraulisch betätigte zweite Kupplung 14, insbesondere eine Zapfwellenkupplung, mit einem Schmierkreis 16, der ebenfalls als Kühlkreis wirkt, vorgesehen. Die Kupplung 10 und die zweite Kupplung 14 sowie die ihnen zugeordneten Schmierkreise 12 und 16 werden über ein Steuersystem 18 betrieben.

Das Steuersystem 18 enthält eine Pumpe 20, die über einen Hauptkreis 22 einen Systemdruck an einem Steuerventil 24 anlegt, wobei das Steuerventil 24 mittels eines Pedals 25 betätigt wird und den aufgebauten Druck der Kupplung 10 über einen Betätigungskreis 26 zuführt.

Die Pumpe 20 baut auch einen Systemdruck in einem Steuerventil 28 auf, das den der zweiten Kupplung 14 zugeführten Betätigungsdruck steuert.

Das Steuersystem 18 ist ferner mit einer Schmiermittelquelle 30 ausgestattet, die Schmiermittel, insbesondere Schmieröl, den Schmierkreisen 12 und 16 über ein erfindungsgemäßes Ventil 32 für die Kupplung 10 und ein Reduzierventil 34 für die zweite Kupplung 14 zuführt. Die Zufuhr von Schmiermittel zu den Schmierkreisen 12 und 16 erfolgt jedoch zudem über Regelventile 36 und 38, die durch den an der Kupplung 10 bzw. den an der zweiten Kupplung 14 anstehenden Druck geöffnet und über einen Fliehkraftregler geschlossen werden.

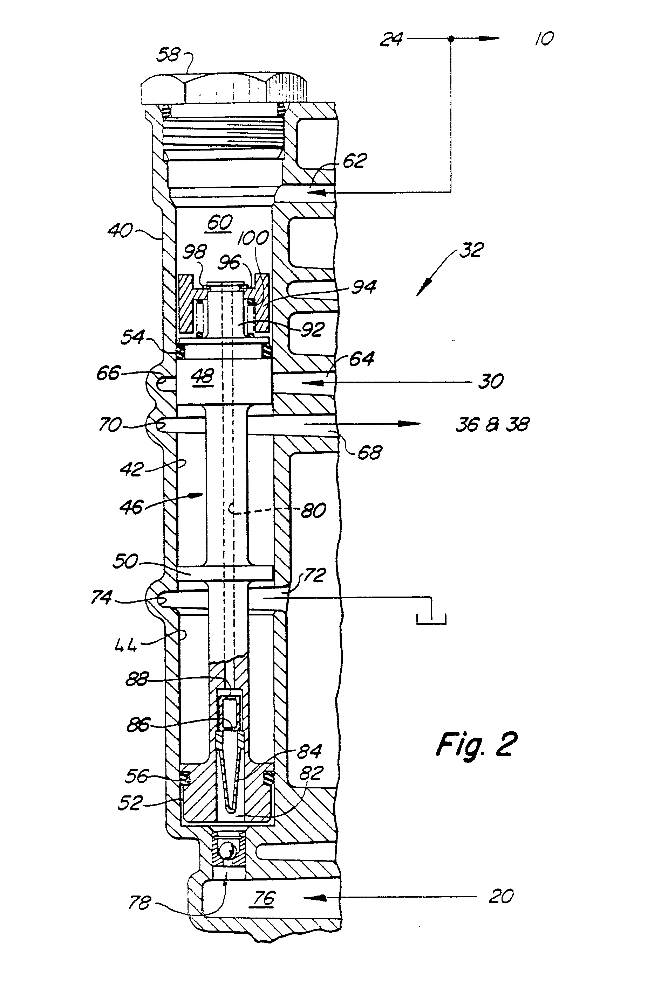

Der Aufbau des Ventils 32 ist am besten aus der Figur 2 zu entnehmen. Es ist dort ersichtlich, daß das Ventil 32 ein Gehäuse 40 mit einer nicht näher bezeichneten Ventilbohrung aufweist, wobei sich die Ventilbohrung in einen Bereich größeren Durchmessers 42 und in einen Bereich kleineren Durchmessers 44 unterteilt und sowohl gleitend wie auch dichtend einen hohlen Ventilschieber 46 in sich aufnimmt. An dem Ventilschieber 46 sind Stege 48, 50 und 52 vorgesehen, wobei in die Stege 48 und 52 jeweils eine Ringnut eingedreht ist, in die O-Ringe 54 und 56 zu Dichtzwekken eingesetzt sind. Die Stege 48 und 52 funktionieren als auf Druck ansprechende Auslöseeinrichtungen bzw. Steuerflächen und weisen unterschiedlich große Durchmesser auf, wobei der Steg 48 den größeren Durchmesser hat. Dementsprechend ist auch die Zuordnung der Stege 48 und 52 zu den Bereichen größeren und kleineren Durchmessers 42 und 44 gewählt.

Das eine Ende des Gehäuses 40 ist durch einen Stopfen 58 abgeschlossen, wodurch eine Pilotkammer 60 zwischen dem Stopfen 58 und dem Ventilschieber 46 gebildet wird, der der Betätigungsdruck für die Kupplung 10 von dem Steuerventil 24 aus über eine Öffnung 62 zugeführt wird. Eine Eingangsöffnung 64 und eine Nut 66 führen dem Bereich größeren Durchmessers 42 der Ventilbohrung Schmiermittel von der Schmiermittelquelle 30 aus zu. Eine Ausgangsöffnung 68 und eine Nut 70 verbinden den Bereich größeren Durchmessers 42 der Ventilbohrung über die Regelventile 36 und 38 mit den Schmierkreisen 12 und 16. Schließlich verbinden eine Auslaßöffnung 72 und eine Nut 74 die Bereiche größeren und kleineren Durchmessers 42 und 44 mit einem Sammelbehälter.

Das andere Ende der Ventilbohrung unterliegt in ihrem Bereich kleineren Durchmessers 44 dem im Hauptkreis 22 herrschenden Systemdruck, der ihr von der Pumpe 20 aufgebaut über eine Öffnung 76 und ein Rückschlagventil 78 zugeführt wird. Durch den Ventilschieber 46 erstreckt sich axial eine Bohrung 80, in die ein Sieb 84 und zwei Drosseln 86 und 88 oder Blenden eingesetzt sind. Demgemäß handelt es sich bei dem Ventil 32 um ein normalerweise geschlossenes Zweistellungsventil, das zum einen durch den an der Kupplung 10 anstehenden und auf den Steg 48 wirkenden Betätigungsdruck und zum anderen durch den im Hauptkreis 22 herrschenden Systemdruck, der auf den Steg 52 wirkt, gesteuert wird.

Ein Schaft 92 erstreckt sich über den Steg 48 hinaus in Richtung auf den Stopfen 58. Auf dem Schaft 92 ist gleitend ein hohles, zylindrisches Element, also eine Hülse 94, über einen Kragen 96 gelagert, der im Innern offen ist und den Schaft 92 umgreift. Ein Sicherungsring oder Anschlag 98 hält die Hülse 94 auf dem Schaft 92 axial fest. Die Hülse 94 wird mittels einer Feder 100 gegen den Anschlag 98 gedrückt, wobei zwischen der Hülse 94 und dem Steg 48 ein Abstand von ca. 3 mm verbleibt. Die Hülse 94 steht über den Schaft 92 vor, so daß dann, wenn der Ventilschieber 46 in Richtung auf den Stopfen 58 zubewegt wird, zuerst die Hülse 94 an dem Stopfen 58 anschlägt und daraufhin die Hülse 94 von dem Anschlag 98 wegbewegt wird, so daß die Feder 100 zusammengedrückt wird, bis die Hülse 94 an dem Steg 48 anschlägt.

Normalerweise ist der von dem Steuerventil 24 ausgehende Druck hoch, die Kupplung 10 eingerückt und das Ventil 32 befindet sich in seiner geschlossenen Stellung, wie dies in der Zeichnung dargestellt ist, und kein Schmiermittel fließt zu den Schmierkreisen 12 oder 16. Dies ergibt sich daraus, daß der Druck in der Pilotkammer 60 auf den Steg 48 mit der größeren Querschnittsfläche wirkt, während die kleinere Querschnittsfläche des Steges 52 von dem seitens der Pumpe 20 aufgebauten Systemdruck beaufschlagt wird.

Sobald das Pedal 25 niedergetreten wird, verringert sich der Druck hinter dem Steuerventil 24 und somit in der Pilotkammer 60, und die Kupplung 10 ist ausgerückt. Währenddessen beaufschlagt der Systemdruck die kleinere Querschnittsfläche von Steg 52 über das Rückschlagventil 78, um den Ventilschieber 46 mit Blick auf Figur 2 nach oben zu bewegen. Gegebenenfalls wird durch die Aufwärtsbewegung die Hülse 94 an dem Stopfen 58 zur Anlage gebracht, so daß sie sich von dem Anschlag 98 abhebt und die Feder 100 zusammengedrückt wird, bis der Steg 48 an das in Figur 2 untere Ende der Hülse 94 anschlägt. In dieser Stellung, die die offene Stellung des Ventils 32 darstellt, kann Schmiermittel ungedrosselt zu den Regelventilen 36 und 38 fließen, die bereits bei einem teilweisen Einrücken der Kupplung 10 oder der zweiten Kupplung 14 öffnen. Dieser uneingeschränkte Schmiermittelfluß hält so lange an, als das Pedal 25 nicht vollkommen niedergedrückt oder die zweite Kupplung 14 eingerückt ist.

In dieser Stellung, in der der Ventilschieber 46 vollkommen nach oben bewegt worden ist, übt die zusammengedrückte Feder 100 eine nach unten gerichtete Kraft auf den Ventilschieber 46 aus, und zwar jeweils mit Blick auf Figur 2. Sobald das Pedal 25 losgelassen wird, um die Kupplung 10 erneut einzurücken, steht in der Pilotkammer 60 wiederum der Betätigungsdruck der Kupplung 10 an, der in der Regel dem Systemdruck entspricht. Die nach unten gerichtete, von der Feder 100 ausgehende Kraft trägt dann zur Überwindung der anfänglichen Haftreibung zwischen den O-Ringen 54 und 56 und den Wandungen der Ventilbohrung im Bereich des größeren und des kleineren Durchmessers 42 und 44 bei, so daß der Ventilschieber 46 sofort eine Bewegung nach unten und zurück zu der anfänglichen und in Figur 2 gezeigten Position beginnen kann. Dieses vorzügliche Merkmal hilft zu vermeiden, daß der Ventilschieber 46 in Situationen hoher Reibung, etwa bei geringen Temperaturen, in der Ventilbohrung festhängt.

Wenn sich in der Pilotkammer 60 der Systemdruck aufgebaut hat, wird der Ventilschieber 46 mit Blick auf Figur 2 nach unten bewegt, und zwar aufgrund der Flächendifferenz zwischen dem oberen Steg 48 und dem unteren Steg 52. Diese nach unten gerichtete Bewegung bedingt, daß sich der Steg 52 entgegen dem Systemdruck bewegt, so daß Schmiermittel durch das Sieb 84 und die Drosseln 86 und 88 gedrängt wird. Die Drosseln 86 und 88 führen dazu, daß die Abwärtsbewegung langsam verläuft, weshalb das Ventil 32 erst nach einer vorbestimmbaren Zeit seine geschlossene Stellung einnimmt und daher als Kupplungsschmierreduktionsverzögerungsventil bezeichnet werden könnte. Demgemäß hält der Schmiermittelfluß auch noch für eine bestimmte Zeit nach dem erneuten Einrücken der Kupplung 10 an, so lange nämlich, bis das Ventil 32 seine geschlossene Stellung eingenommen hat. Die Querschnittsflächen der Stege 48 und 52 wie auch die Größe der Drosseln 86 und 88 können verändert werden, um die Verzögerungszeit, also die Zeit, in der die Schmierung noch nach dem Wiedereinrücken der Kupplung 10 anhält, zu bestimmen.

Dieses Merkmal der Verzögerung ist deshalb von großem Vorteil, weil es eine zusätzliche Schmierung zwischen häufigen Schaltwechseln der Kupplung 10 besorgt und somit deren Beschädigung infolge zu hoher Wärmeentwicklung vorgebeugt wird. Jedoch erhöht die Beendigung des Schmiervorgangs nach dem Einrücken der Kupplung 10 unter normalen Verhältnissen die Wirtschaftlichkeit des Steuersystems 18 wie auch die der Kupplung 10. Überdies sorgt dieses Steuersystem 18 im Falle eines Schadens an dem Betätigungskreis 26 zum Einrücken der Kupplung 10 dafür, daß der Systemdruck das Ventil 32 in seine offene Stellung drängt, so daß dann die Schmierung einsetzt und die gegebenenfalls durchrutschende Kupplung 10 gekühlt und geschmiert wird.

Durch die Möglichkeit, den Schmiermittelfluß zu der zweiten Kupplung 14 zu unterbrechen, ergibt sich eine Verringerung eines schädlichen Bewegungswiderstandes an der zweiten Kupplung 14 durch das Schmiermittel.

Das Reduzierventil 34 ist ein Dreistellungsventil (geschlossen-offen-geschlossen), das durch eine Feder 110 in eine seiner geschlossenen Stellungen gebracht wird, wenn der Betätigungsdruck für die zweite Kupplung 14 von der Pumpe 20 über das Steuerventil 28 kommend gering ist, so wie dies der Fall ist, wenn die zweite Kupplung 14 nicht eingerückt ist. Wenn der Druck hinter dem Steuerventil 28 ansteigt, um die zweite Kupplung 14 einzurücken, dann wird mittels dieses Druckes das Reduzierventil 34 in seine mittlere Stellung bewegt, wodurch Schmiermittel von der Schmiermittelquelle 30 aus zu den Schmierkreisen 12 und 16 über die Regelventile 34, 36 und 38 geleitet wird. Eine Feder 112 dient dazu, der von der mittleren, offenen Stellung des Reduzierventils 34 weggerichteten Bewegung des Reduzierventils 34, aufgrund des von der Pumpe 20 gelieferten hohen Druckes, einen Widerstand zu bieten.

## Patentansprüche

1. Ventil (32) mit einem in einer Ventilbohrung gleitend geführten Ventilschieber (46), der in eine Stellung, in der er einen Durchgang freigibt, und in eine Stellung, in der er den Durchgang sperrt, mittels endseitig an den Ventilschieber (46) angelegter Drücke bringbar ist, dadurch gekennzeichnet, daß zumindest an einem der Enden des Ventilschiebers (46) eine Federvorrichtung vorgesehen ist, die über einen an dem anderen Ende des Ventilschiebers (46) anstehenden Druck vorgespannt wird und daß die Federvorrichtung (100) den Ventilschieber (46) aus der der Vorspannung unterliegenden Endstellung zur Überwindung der anfänglichen Haftreibung über einen vorbestimmten Weg bewegt.

2. Ventil nach Anspruch 1, dadurch gekennzeichnet, daß die Federvorrichtung erst vorgespannt wird, kurz bevor der Ventilschieber (46) seine den Durchgang freigebende Stellung erreicht hat.

3. Ventil nach Anspruch 1, dadurch gekennzeichnet, daß die Federvorrichtung aus einer vorgespannten Feder (100) und einer auf dem Ventilschieber (46) in Grenzen axial beweglich geführten Hülse (94) besteht.

4. Ventil nach Anspruch 3, dadurch gekennzeichnet, daß die Hülse (94) durch die Feder (100) in eine Stellung gebracht wird, in der sie über das entsprechende Ende des Ventilschiebers (46) vorsteht, solange dieser seine den Durchgang freigebende Stellung nicht erreicht hat.

5. Ventil nach Anspruch 3 oder 4, wobei die Ventilbohrung einenends geschlossen ist, dadurch gekennzeichnet, daß die Hülse (94) an dem geschlossenen Ende der Ventilbohrung zur Anlage bringbar ist.

6. Ventil nach einem oder mehreren der vorherigen Ansprüche, dadurch gekennzeichnet, daß der Ventilschieber (46) an dem der Federvorrichtung zugelegenen Ende einen Schaft (92) mit einem Anschlag (98) und einer Schulter aufweist, daß die Hülse (94) mit einem sich radial nach innen erstreckenden und eine Bohrung aufweisenden Kragen (96) versehen ist, daß sich zwischen dem Kragen (96) und der Schulter die Feder (100) erstreckt und der Kragen (96) mit der Hülse (94) zwischen der Schulter und dem Anschlag (98) axial beweglich ist.

## Claims

1. Valve (32) with a valve spool (46) slidably guided in a valve bore, which spool can be brought by means of pressure applied to the ends of the valve spool (46) into a position in which it opens up a passage and a position in which it blocks the passage, characterized in that there is provided at at least one of the ends of the valve spool (46) a spring device which is pretensioned by a pressure acting on the other end of the valve spool (46) and in that the spring device (100) moves the valve spool (46) out of the end position subject to the pre-tension through a predetermined path for overcoming the initial static friction.

2. Valve according to claim 1 characterized in that the spring device is first pre-tensioned shortly before the valve spool (46) has attained its position opening up the free passage.

3. Valve according to claim 1, characterized in that the spring device consists of a pre-tensioned spring (100) and a guided sleeve (94) axially movable on the valve spool (46) within limits.

4. Valve according to claim 3, characterized in that the sleeve (94) is brought by the spring (100) into a position in which it projects beyond the corresponding end of the valve spool (46), so long as this has not attained its position opening up the free passage.

5. Valve according to claim 3 or 4, wherein the valve bore is closed at one end, characterized in that the sleeve (94) can be brought into abutment against the closed end of the valve bore.

6. Valve according to one or more of the preceding claims, characterized in that the valve spool (46) has at the end with the spring device a shaft (92) with a stop (98) and a shoulder in that the sleeve (94) is provided with a collar (96) extending radially inwardly and having a bore in that the spring (100) extends between the collar (96) and the shoulder and the collar (96) is axially movable with the sleeve (94) between the shoulder and the stop (98).

## Revendications

1. Valve (32) comportant un tiroir (46) guidé de façon à coulisser dans un alésage de valve, qui peut être amené dans une position en laquelle il ouvre un passage et dans une position en laquelle il ferme le passage au moyen de pressions appliquées aux extrémités du tiroir (46), caractérisée en ce qu'on prévoit au moins à l'une des extrémités du tiroir (46) un dispositif élastique qui est précontraint au moyen d'une pression présente à l'autre extrémité du tiroir (46), et en ce que le dispositif élastique (100) éloigne le tiroir (46) de la position terminale soumise à la précontrainte sur un trajet déterminé pour vaincre le frottement statique initial.

2. Valve suivant la revendication 1, caractérisée en ce que le dispositif élastique n'est précontraint que peu avant que le tiroir (46) ait atteint sa position ouvrant le passage.

3. Valve suivant la revendication 1, caractérisée en ce que le dispositif élastique comprend un ressort (100) précontraint et un manchon (94) guidé sur le tiroir (46) de façon à se déplacer axialement dans certaines limites.

4. Valve suivant la revendication 3, caractérisée en ce que le manchon (94) est amené, par le ressort (100), dans une position en laquelle il dépasse de l'extrémité correspondante du tiroir (46), tant que celui-ci n'a pas atteint sa position ouvrant le passage.

5. Valve suivant la revendication 3 ou 4, l'alésage de valve étant fermé à une extrémité, caractérisée en ce que le manchon (94) peut être amené au contact de l'extrémité fermée de l'alésage de valve.

6. Valve suivant une ou plusieurs des revendications précédentes, caractérisée en ce que le tiroir (46) comporte, à l'extrémité située du côté du dispositif élastique, une tige (92) comportant une butée (98) et un épaulement, en ce que le manchon (94) comporte un collet (96) s'étendant radialement vers l'intérieur et comportant un alésage, en ce que le ressort (100) s'étend entre le collet (96) et l'épaulement, et en ce que le collet (96) est mobile axialement avec le manchon (94) entre l'épaulement et la butée (98).

Fig. I

*Fig. 2*